# EUROPEAN PATENT SPECIFICATION

(11) **EP 4 064 852 B1**
(45) Date of publication and mention of the grant of the patent: **12.02.2025**
(21) Application number: 21775049.6
(22) Date of filing: 25.03.2021
(51) Int. Cl.: A23J 3/20, A23L 31/00

(54) **MUSHROOM-BASED FOOD PRODUCT**
NAHRUNGSMITTEL AUF PILZBASIS
PRODUIT ALIMENTAIRE À BASE DE CHAMPIGNON

(30) Priority: 25.03.2020 AU 2020900920
(43) Date of publication of application: 05.10.2022
(73) Proprietor: Fable Holdings Pty Ltd, Hunchy QLD 4555 (AU)
(72) Inventor: FULLER, James, Hunchy QLD 4555 (AU); MCLOGHLIN, Christopher, Hunchy QLD 4555 (AU); FOX, Michael, Hunchy QLD 4555 (AU)
(74) Representative: Loo, Chi Ching
(86) International application number: PCT/AU2021/050270
(87) International publication number: WO 2021/189111

(56) References cited:
- WO-A1-2017/014654
- WO-A1-2018/154116
- WO-A1-2018/189738
- CN-A- 102 058 093
- CN-A- 106 690 289
- JP-A- 2008 271 877
- KR-A- 20140 135 041
- TW-A- 201 026 237
- US-A1- 2020 060 310
- SINGH JYOTI, SINDHU SANGEETA C., KUMARI VARSHA: "Development and Evaluation of Shiitake Mushroom (Lentinus edodus) Instant Soup Mixes", INTERNATIONAL JOURNAL OF CURRENT MICROBIOLOGY AND APPLIED SCIENCES, EXCELLENT PUBLISHERS, INDIA, vol. 6, no. 5, 20 May 2017 (2017-05-20), India , pages 1232 - 1238, XP055896186, ISSN: 2319-7692, DOI: 10.20546/ijcmas.2017.605.133
- DATABASE Mintel April 2006 (2006-04-01), ANONYMOUS: "Vegetable Soup (Mushroom & Onion)", XP055896212, retrieved from GNPD Database accession no. 432598

## Description

### Field of the Invention

The present invention relates to mushroom-based meat substitutes and methods of producing mushroom-based meat substitutes.

The invention has been developed to provide versatile alternatives to meat that can mimic the visual, textural, and/or flavour characteristics of meat, and in particular, cooked meat products.

### Background of the Invention

Any discussion of the prior art throughout the specification should in no way be considered as an admission that such prior art is widely known or forms part of common general knowledge in the field.

In response to concerns about the warming effect of greenhouse emissions produced by the livestock industry, as well as awareness of the effects of land clearing measures, water usage, and animal rights, consumers are increasingly leaning towards ways to reduce, eliminate or substitute meat products from their diets. This has spawned a large industry devoted to meat substitutes, with the products varying greatly in their quality, availability and applicability to conventional cooking methods and ability to be used as a convincing substitute to meat in popular dishes.

The majority of meat substitutes presently available have been largely based on mince-like, extruded and/or highly processed, uniform sheets of texturized proteins, which generally lack the tenderness of meat, and suffer from being rubbery, chewy, spongy and the like. While these meat substitutes are often plant-based, they are typically bound by modified, synthetic starches and consist of unacceptable amounts of preservatives, synthetic flavours and salts, with little emphasis being placed on the nutritional value of the meat substitute.

Besides lacking the nutritional advantage of the high protein content associated with meat and meat products, available meat substitutes tend to lack the desirable characteristics associated with the actual consumption of meat, namely, the flavour, smell and texture of meat. In general, meat substitutes lack the taste, texture and versatility of real meat and cannot be used for dishes that require stewed, chunky, barbequed, roasted, braised, or pulled meat. Indeed, in an attempt to mimic the desirable properties of meat, meat substitutes have been developed that incorporate cultured mammalian cells. While these products may be promoted as more sustainable than meat, the addition of cultured cells would generally be undesirable for the majority of persons seeking a meat-free diet, and may also be offensive to consumers in view of the artificial, bioengineering aspect for the mammalian cell lines being used.

This limits the applicability of meat substitutes for the restaurant and catering sectors, as well as those individuals wishing to reduce their meat consumption, but have particular preferences for the types of food they regularly eat.

It is an object of the present invention to overcome or ameliorate the above discussed disadvantages of the prior art, or at least offer a useful alternative.

Specifically, it would be desirable to develop a meat substitute that more closely resembles different types, cuts and preparations of meat that have similar nutritional, textural, visual, aroma and flavour profiles of real meat. WO2017/014654 describes a vegetable meat substitute comprising leguminous grains/seed, oilseeds or cereal where the grains/seeds or cereal are soaked in water or a prepared salt solution prior to be admixed with other substances to form burgers, paté, sausages, etc. The paté comprises vegetable ingredients including mushrooms cooked while mixing, followed by mincing, dispensing then autoclaving. KR 2014 0135041 describes a composition of artificial meat products comprising rice and mushroom admixed into a dough and formed into a sausage cooked by pressure cooking and steaming. CN 106 690 289 describes a vegetable meat product having the appearance of meat fibres formed from the stems of shiitake mushrooms. The method of making the product mixing dietary fibres of the stems of the shiitake mushrooms, soybean protein isolate, cassava starch, glutinous rice flour, fructus gleditsiae juice, palm oil, beet powder, sodium hydrogen carbonate and dicalcium phosphate; heating in a water bath 40-50oC for 20min to 30min; sufficiently stirring the raw materials to form a crude material; heating to 90-130oC by utilizing a double-screw extruder, so as to form a hot crude material; conveying the hot crude material to an entrance of a cooling device; enabling the hot crude material to pass through the cooling device under the pressure of 100psi to 800psi, so as to obtain the product. CN 102 058 093 discloses methods for preparing shredded mushroom and mushroom dried meat floss by using stems of waste mushrooms generated during mushroom processing. The method for preparing shredded mushroom comprises sequentially carrying out a softening process, acid soaking process, high-pressure saturated steam process and shredding process on the stems of mushrooms to prepare the shredded mushroom. This is followed by mixing the shredded mushroom with flavours, frying and twisting to loosen the fibres.

### Summary of the invention

The present invention is set forth in the appended claims.

By meat substitute is meant a substance that can act as a substitute for any type of meat, where the meat is the flesh or organ of any animal such as, but not limited to, beef, lamb, mutton, poultry, game animals, kangaroo, and the like. The meat substitute may be a substitute for any cut of meat, and may be a substitute for meat in any prepared form, such as, but not limited to, minced meat, shredded meat, cubed, diced or sliced meat, meat patties, sausages, processed meat products, or large bone-free cuts of meat such as steaks, roasts, breast, loins etc. The meat substitute is vegetarian (free of animal flesh products, including animal or animal derived cells). Preferably, the meat substitute is vegan (substantially free of any animal derived products). The meat substitute may be in a form suitable for immediate consumption or may require cooking, heating or further processing as desired.

By mushroom-based is meant that the main proteinaceous and/or fibrous ingredient in the meat substitute is mushroom or mushroom derived. It would be understood that the mushroom-based meat substitute may comprise additional proteinaceous and/or fibrous plant-based material and/or additional synthetic proteinaceous and/or fibrous material, but that at least 50% (w/w) of the proteinaceous and/or fibrous content of the mushroom-based meat substitute would be mushroom or mushroom derived material. The mushroom-based meat substitute may comprise other vegetable matter, but would not contain any meat derived from an animal.

The mushroom(s) used in the mushroom material of the method of the present invention can be any edible mushroom. By edible is meant either part or all of the mushroom may be safely consumed by a human when fresh, or either part or all of the mushroom may only be safely consumed by a human after a processing or cooking step, wherein the processing or cooking may remove or inactive any harmful components of the mushroom or part thereof. By safely consumed is meant that the consumption does not result in ill-health or death of the consumer.

The mushroom material may be material from any mushroom, including but not limited to mushrooms of the genera agaricus, lentinula, pleurotus, hericium, laetiporus, armillaria, pioppini, flammulina, hypsizygus, lyophyllum, cantharellus, craterellus, clitocybe, boletus, grifola, gyromitra, hydnum, cortinarius, lactarius, tricholoma, volvariella, ganoderma, auricularia, sparassis, morchella, tuber, amanita, clavariaceae, calvatia, coprinus, fistulina, leccinum, lepiota, suillus, coprinopsis, russula and/or polyporus, or combination thereof.

More specifically, the mushroom material may be material from a mushroom of the species *Agaricus bernardii, Agaricus crocodilinus, Agaricus fuscofibrillosus, Agaricus haemorrhoidarius, Agaricus rodmanii, Agaricus bitorquis, Agaricus bisporus, Boletus aereus, Boletus appendiculatus, Boletus badius, Boletus barrowsii, Boletus bicolor, Boletus mirabilis, Boletus pinicola, Boletus regius, Boletus zelleri, Cantharellus lateritius, Clitocybe fragrans, Clitocybe odora, Clitopilus prunulus, Cortinarius armillatus, Entoloma abortivum, Falmmulina velutipes, Gomphus clavatus, Grifola frondosa, Polypilus frondosa, Gyromitra gigas, Hericium americanum , Hericium ramosum, Hericium erinaceus, Hericium corraloides, Hyspsizygus tessulatus, Lyophyllum decastes, Lyophyllum shimeji, Hygrophorus russula, Leccinum aurantiacum, Leccinum insigne, Leccinum scabrum, Lentinula edodes, Lentinula lateritia, Marasmius scorodonius, Pholiota aurivella, Phlogiotis helvelloides, Pluteus cervinus, Pleurotus ostreatus, Pleurotus eryngii, Polyozellus multiplex, Polyporus umbellatus, Ramaria botrytis, Rozites caperata, Russula aeruginea, Russula cyanoxantha, Russula delica, Russula nigricans, Russula vesca, Russula xerampelina, Sparassis crispa, Russula radicata, Strobilomyces floccopus, Strobilomyces confuses, Stropharia rugosoannulata, Suillis brevipes and*/*or Suillis pictus.*

In some preferred embodiments of the invention, the mushroom material may be material from mushrooms of the genera agaricus, lentinula, pleurotus, hericium, laetiporus, armillaria, pioppini, flammulina, hypsizygus, lyophyllum and/or canterellus. In other embodiments of the invention, the mushroom material comprises two or more, or three or more, or four or more, or five or more different types of mushroom, wherein the type refers to a genera, species or subspecies. It would be understood that some mushrooms would have preferred flavour profiles and/or textures that would be more suited to some mushroom-based meat substitutes for different types of meats of meat preparations.

The mushroom material according to the present invention substantially comprises mushroom stem.

The mushroom material may comprise more than one type of mushroom and may comprised the same, or different, parts of more than one mushroom. In some examples, the mushroom material may substantially comprise the stems of one type of mushroom or the mushroom material may substantially comprise the stems of four or more types of mushroom.

The mushroom(s) used for the mushroom material of the present invention may be fresh, or may have been precooked, cured, brined, dried, blanched or smoked prior to being used in the method of the present invention. The mushroom material may comprise a mixture of fresh, precooked, cured, brined, dried, blanched and/or smoked mushroom(s). For example, the mushroom material may comprise fresh mushroom material and cured mushroom material. In another example, the mushroom material may comprise dried, blanched and fresh mushroom material. In other examples, the mushroom material may substantially comprise fresh mushroom, with a small amount of dried mushroom, or the mushroom material may substantially comprises dried mushroom.

The mushroom material used to produce the raw mushroom-based meat substitute in the method of the present invention is substantially free of whole mushroom, in that the mushroom material would comprise mushroom that had undergone either mechanical or manual processing, or combinations thereof. The manual or mechanical processing is employed to produce a mushroom material comprising sliced, trimmed, ground, grated, shredded, cut and/or chopped mushroom pieces. It would be understood mushroom material could comprise mushroom pieces of different sizes and shapes, and the choice of size and shape of the mushroom pieces in the mushroom material would be dependent on factors such as the type of mushroom-based meat substitute being produce by the method, the type of mushroom(s) and parts of mushrooms being used in the mushroom material, and the like. For example, in embodiments of the invention wherein the mushroom-based meat substitute being produced is a substitute for a pulled meat product, the mushroom material may be shredded prior to being used to produce the raw mushroom-based meat substitute.

Preferably, prior to the mushroom(s) being mechanically or manually processed to produce sliced, trimmed, ground, grated, shredded, cut and/or chopped mushroom pieces, the whole mushrooms (be them fresh, precooked, cured, brined, dried, blanched and/or smoked), or parts thereof (i.e., if the starting mushroom material is limited stems, caps and/or the like), are subjected to a hydration step to soften the mushroom fibre for the mechanical or manual processing. The hydration step involves soaking, submerging and/or spraying the mushrooms, or parts thereof, in/with a suitable liquid, generally water, for a period of at least 10 minutes, or up to 10 hours. The duration of the soak, submersion or spraying will be dependent on factors such at the state of the mushrooms being hydrated (wherein dry mushrooms may require a longer soak than fresh mushrooms), the type and/or part of the mushroom(s) being hydrated (wherein mushroom stems may require a longer soak than mushroom caps) and the temperature of the liquid used in the soak, submersion or spray (wherein mushroom may require a shorter soaking time in warm or hot water compared to cold or room temperature water).

If performed, the hydration step would be followed by dehydration step to remove the excess liquid from the mushrooms or parts thereof, without substantially removing the liquid that had been soaked up into the mushrooms or parts thereof. In embodiments of the invention where the hydration step is performed, the dehydration step may involve the straining or gentle centrifugation of the mushrooms or parts thereof. Preferably, the excess liquid from the dehydration is captured and reserved, and may be used for the production of additional mushroom-based substitutes for products that often accompany meat, such as gravies and sauces. In other embodiments, the excess liquid from the dehydration is captured and reserved and used in the preparation of an emulsion to be used in the method of the invention (as the liquid component of the emulsion) and/or may be used in the preparation of the raw mushroom-based meat substitute.

In some embodiments of the invention, the mushroom material is exposed to a forming process or a retort process, and/or a further optional process, prior to being combined with the binding agent and/or emulsion to form the raw mushroom-based meat substitute. For example, the mushroom material may be subjected to low temperature deep fat frying at 100-120C process to enhance the texture, flavour and colour of the mushroom material prior to combining with the emulsion and/or binding agent, in order to enhance the texture, flavour and colour of the resulting mushroom-based meat substitute produced by the method of the invention. In other example, the mushroom material may be subjected to a high-positive pressure (HPP) process and/or a sous vide process in the presence of, for example, additional liquid, flavours, seasonings, preservatives, or fats to enhance the texture, flavour and colour of the mushroom material prior to combining with the emulsion and/or binding agent, in order to texture, flavour and colour of the resulting mushroom-based meat substitute produced by the method of the invention.

In preferred embodiments of the invention, the mushroom material substantially comprises dried mushroom stems of the genera agaricus, lentinula, pleurotus, hericium, laetiporus, armillaria, pioppini, flammulina, hypsizygus, lyophyllum and/or cantharellus, which are hydrated in water prior to being dried by gentle centrifugation and shredded, to produce a mushroom material to be used in the preparation of the raw mushroom-based meat substitute.

According to the invention, the mushroom-based meat substitute comprises 30-95% (w/w) mushroom material, wherein the % (w/w) would be based on the starting weight of the mushroom material prior to preparing the raw mushroom-based meat substitute or retorting or forming. In instances where the mushroom material used in the method is fresh mushroom material, this would be the fresh weight, while in instances where the mushroom material being used in the method was rehydrated dried mushroom, the % (w/w) would be the weight of the mushroom material after rehydration. The % (w/w) of the mushroom material may be influenced by factor such as the source of the mushroom material, the method of mechanical processing to produce the mushroom material, the type of mushroom being used, whether the binding agent and/or the emulsion is used in the method, the desired end use of the meat-substitute, and whether the mushroom material is to be exposed to a forming or retorting process or any other optional process prior to being used in the preparation of the raw mushroom-based meat substitute.

In preferred embodiments of the invention, the mushroom-based meat substitute comprises at least at least about 40% (w/w) mushroom material, or at least about 50% (w/w) mushroom material, or at least about 60% (w/w) mushroom material, or at least about 70% (w/w) mushroom material, or at least about 80% (w/w) mushroom material, or at least 90% (w/w) mushroom material, or at least 95% (w/w) mushroom material. In other preferred embodiments of the invention, the mushroom-based meat substitute comprises 30% (w/w) to about 90% (w/w) mushroom material, or about 30% (w/w/) to about 80% (w/w) mushroom material, or about 30% (w/w) to about 60% (w/w) mushroom material, or about 30% (w/w) to about 70% (w/w) mushroom material, or about 40% (w/w) to about 60% (w/w) mushroom material, or about 40% (w/w) to about 50% (w/w) mushroom material, or about 50% (w/w) to about 60% (w/w) mushroom material, or about 60% (w/w) to about 70% (w/w) mushroom material, or about 70% (w/w) to about 80% (w/w) mushroom material, or about 80% (w/w) to about 90% (w/w) mushroom material, or about 90% (w/w) to about 95% (w/w) mushroom material, or about 30% (w/w) to about 40% (w/w) mushroom material or about 35% (w/w) to about 45% (w/w) mushroom material, or about 35% (w/w) to about 40% (w/w) mushroom material, or about 40% (w/w) to about 45% (w/w) mushroom material, or about 45% (w/w) to about 50% (w/w) mushroom material, or about 50% (w/w) to about 55% (w/w) mushroom material, or about 55% (w/w) to about 60% (w/w) mushroom material.

The emulsion used in the methods of making mushroom-based meat substitutes of the invention comprises an emulsifier, a polar liquid and a carrier oil. The emulsion may be an oil-in-liquid or liquid-in-oil emulsion, though is preferably an oil-in-liquid emulsion. It would be understood that the emulsifier is used to stabilise the emulsion. The emulsion is used in the mushroom-based meat substitute of the present invention to assist in keeping the ingredients together, impart some flavour and/or may also provide a vehicle to include oil in the mushroom-based meat substitute in a stable format, such that the oil is released in a realistic fashion when cooking the mushroom-based meat substitute.

The emulsifier used in the compositions of the present invention may be any compound or composition suitable for producing mixtures of substances that would not ordinarily mix (emulsions). In general, an emulsifier consists of a water-loving hydrophilic head and an oil-loving hydrophobic tail. The emulsifier may be an oil-in-water or water-in-oil emulsifier, though is preferably an oil-in-water emulsifier. In embodiments of the present invention, the emulsifier may be an ionic (cationic or anionic) emulsifier, a zwitterionic emulsifier, protein/peptide emulsifier, or a non-ionic emulsifier. The emulsifier may be protein-based, polysaccharide based, phospholipid based, and/or combinations thereof. Preferably, the emulsion comprises at least a protein-based or phospholipid-based emulsifier. In embodiments of the invention, the emulsifier used is a heterogenous substance comprising a phospholipid emulsifier, or a heterogenous substance comprising a protein emulsifier, or a heterogenous substance comprising a phospholipid emulsifier and a protein emulsifier.

The emulsifier may be selected from the group consisting of pure forms of, or extracts/substances comprising, hydrogenated castor oil, lecithin, macrogolglycerol hydroxystearate, oat oil polar lipids, phosphatidylcholine, citric acid esters, palm oil, legume oils and proteins, poloxamers, polyoxyl 35 castor oil, polyoxyl 40 castor oil, whey protein, polysorbate 20, polysorbate 60, polysorbate 80, polyglycerol polyricinoleate, glyceryl monooleate, carrageenan, guar gum, gum arabic, canola oil polar lipids, and polyglycerol esters of fatty acids, or combinations thereof.

In preferred embodiments of the invention, the emulsifier is plant derived and comprises a protein and/or a phospholipid emulsifier. Non-limiting examples of preferred protein or phospholipid emulsifiers include those derived from legumes (fava bean, chickpea, lentil, pea and soybean), and in particular, those comprising high levels of lecithin, such as isolated soy protein and/or soy oil.

The emulsion may comprise one or more emulsifiers, wherein the total amount of emulsifier in the emulsion is 5% (w/w) - 99% (w/w). Preferably, the total amount of emulsifier in the emulsion is 10% (w/w) - 50% (w/w). In other embodiments, the total amount of emulsifier in the emulsion is 50% (w/w) - 75% (w/w), or 10% (w/w) - 25% (w/w), or 5% (w/w) - 20% (w/w), or 20% (w/w) - 75% (w/w), or 5% (w/w) - 45% (w/w). The mass of the emulsifier used to calculate the percentage of emulsifier in the emulsion may be the mass of the emulsifier *per se* if using a pure or clarified emulsifier preparation (i.e., polysorbate 20), or it may be the mass of the emulsifier-containing heterogenous substance (i.e., isolated soy protein).

For example, the emulsion may comprise about 0.5% (w/w) to about 10 % (w/w) of one or more phospholipid emulsifiers and about 5% (w/w) to about 50% (w/w) of one or more protein emulsifiers, or the emulsion may comprise a total of about 2.5% (w/w) to about 10 % (w/w) phospholipid emulsifiers and a total of about 10% (w/w) to about 25% (w/w) of protein emulsifiers, or the emulsion may comprise about 5% (w/w) to about 25% (w/w) of a heterogenous substance comprising a protein emulsifier and/or a phospholipid emulsifier. In other examples, the emulsion may only comprise one emulsifier at about 5% (w/w) to about 70% (w/w), or emulsion may comprise about 0.2% (w/w) to about 20 % (w/w) of one emulsifier such as lecithin and about 10% (w/w) to about 50% (w/w) of a different emulsifier, such as hydrogenated castor oil, or a derivative or precursor thereof.

In other examples, the emulsion may comprise 1% (w/w) - 10% (w/w) hydrogenated castor oil, 0.2% (w/w/) - 25% (w/w) lecithin, oat oil or isolated soy protein, and/or 0.5% (w/w) - 5% (w/w) glyceryl monooleate, or the emulsion may comprise 5% (w/w) - 50% (w/w) phospholipid emulsifier, and 0.5% (w/w) - 5% (w/w) of a different emulsifier. In further embodiments of the invention, the emulsion comprises 10% (w/w) - 15% (w/w) isolated soy protein, or the emulsion comprises 10% (w/w) - 20% (w/w) of a heterogenous substance comprising lecithin.

In a further example, the emulsion comprises two or more emulsifiers selected from the group consisting of pure forms of, or extracts comprising, hydrogenated castor oil, lecithin, macrogolglycerol hydroxystearate, oat oil polar lipids, phosphatidylcholine, citric acid esters, palm oil, legume oils and proteins, poloxamers, polyoxyl 35 castor oil, polyoxyl 40 castor oil, whey protein, polysorbate 20, polysorbate 60, polysorbate 80, polyglycerol polyricinoleate, glyceryl monooleate, carrageenan, guar gum, gum arabic, canola oil polar lipids, and polyglycerol esters of fatty acids, wherein the emulsifiers are present in the emulsion at a total concentration of about 0.5% (w/w) to about 50% (w/w).

The carrier oil present in the emulsion used in the present invention may be any oil selected from the group consisting of, or comprising, medium chain triglycerides, long chain triglycerides, caprylic and/or capric triglycerides, coconut oil, corn oil, cottonseed oil, olive oil, sesame oil, soybean oil, peanut oil, castor seed oil, oleic acid, almond oil, apricot kernel oil, lemon grass oil, sunflower seed oil, wheat germ oil, macadamia oil, meadowfoam seed oil, hemp seed oil, grape seed oil, marula oil, rice bran oil, avocado oil, citrus oil and carrot seed oil. The emulsion may comprise one or more carrier oils, wherein the total amount of carrier oil in the emulsion is 1% (w/w) - 50% (w/w). Preferably, the total amount of carrier oil in the emulsion is about 5% (w/w) to about 30% (w/w). More preferably, the total amount of carrier oil in the emulsion is about 10% (w/w) to about 25% (w/w).

In one or more embodiments of the invention, the emulsion comprises two or more carriers oils selected from the group consisting of medium chain triglycerides, long chain triglycerides, caprylic and/or capric triglycerides, coconut oil, corn oil, cottonseed oil, olive oil, sesame oil, soybean oil, peanut oil, castor seed oil, oleic acid, almond oil, apricot kernel oil, lemon grass oil, sunflower seed oil, wheat germ oil, macadamia oil, meadowfoam seed oil, hemp seed oil, grape seed oil, marula oil, rice bran oil, avocado oil, citrus oil and carrot seed oil, wherein each of the carrier oils is present at a concentration of about 0.5% (w/w) to about 10% (w/w), or about 1.5% (w/w) to about 20% (w/w). In further embodiments of the invention, the emulsion comprises medium chain triglycerides, olive oil and/or coconut oil.

In preferred embodiments of the invention, the carrier oil may be any oil derived from an oil-producing plant, and may be any mixture of any number of different plant oils. In preferred embodiments, the emulsion may comprise at least 2% (w/w), at least 5% (w/w), at least 10% (w/w), at least 15% (w/w), at least 20% (w/w), or at least 30% (w/w) plant oil. In preferred embodiments, the emulsion may comprise about 10% (w/w), about 15% (w/w), about 20% (w/w), about 25% (w/w) or about 30% (w/w) plant oil.

In preferred embodiments of the invention, the carrier oil is coconut oil. In particularly preferred embodiments of the invention, the emulsion may comprise up to 20 % (w/w) coconut oil. In preferred embodiments, the compositions may comprise at least 2% (w/w), at least 5% (w/w), at least 7% (w/w), or at least 10% (w/w) coconut oil. In other preferred embodiments, the compositions may comprise about 5% (w/w), or about 10% (w/w), or about 20% (w/w) coconut oil.

The emulsion used in the method of the present invention comprises a polar liquid that is generally water, or at least is primarily water, but may include other liquids such as vinegar or citrus juices or flavoured polar liquids, such as stock or the liquid obtained from rehydrating dried mushrooms or mushroom material. The emulsion may comprise one or more polar liquids, wherein the total amount of the liquid in the emulsion is 10% (w/w) - 90% (w/w). More preferably, the total amount of polar liquid in the emulsion is 25% (w/w) - 80% (w/w). In preferred embodiments, the emulsion comprises about 50% (w/w) to about 80% (w/w) liquid, or about 65% (w/w) to about 75% (w/w) liquid.

In various embodiments of the invention, the emulsion comprises 5% (w/w) - 50% (w/w) total emulsifier, 40% (w/w) - 90% (w/w) total polar liquid and 5% (w/w) - 50% (w/w) total carrier oil. In preferred embodiments, the emulsion comprises 10% (w/w) - 25% (w/w) total emulsifier, 50% (w/w) - 80% (w/w) total polar liquid and 10% (w/w) - 25% (w/w) total carrier oil. In further preferred embodiments, the emulsion comprises about 10% (w/w) to about 20% (w/w) isolated soy protein, about 65% (w/w) to about 75% (w/w) water, and about 10% (w/w) to about 20% (w/w) coconut oil. In other embodiments of the emulsion used in the methods of the present invention, the ratio of emulsifier to polar liquid to carrier oil may be 1:10:1 to 1:2:1, or 1:10:5 to 5:10:1, or 1:2:5 to 5:2:1. In other preferred embodiments of the emulsion used in the methods of the present invention, the ratio of emulsifier to polar liquid to carrier oil may be about 1:5:1.

The emulsion may be formed by any suitable method, but would generally comprise the steps of agitating a mixture of the emulsifier, polar liquid and the carrier oil. In embodiments of the invention, the emulsifier may be mixed with the polar liquid first, before being mixed with the carrier oil. The agitation used to create the emulsion may be achieved by manual or mechanical means, and may include, but is not limited to, rotary or static mixers, high-shear mixers, homogenisers, and the like. The emulsion components are mixed until a smooth, consistent mixture is achieved prior to using the emulsion in the preparation of the raw mushroom-based meat substitute.

According to the invention the mushroom-based meat substitute comprises about 2% w/w to about 60% w/w emulsion. In preferred embodiments of the invention the mushroom-based meat substitute comprises at least 5% (w/w) emulsion, or at least 10% (w/w) emulsion, or at least 20% (w/w) emulsion, or at least 30% (w/w) emulsion, or at least 40% (w/w) emulsion, or at about 50% (w/w) emulsion, or at least 60% (w/w) emulsion. In other preferred embodiments of the invention, the mushroom-based meat substitute comprises about 5% (w/w) to about 60% (w/w) emulsion, or about 10% (w/w) to about 60% (w/w) emulsion, or about 20% (w/w) to about 60% (w/w) emulsion, or about 30% (w/w) to about 60% (w/w) emulsion, or about 40% (w/w) to about 60% (w/w) emulsion, or about 40% (w/w) to about 50% (w/w) emulsion, or about 5% (w/w) to about 40% (w/w) emulsion, or about 10% (w/w) to about 40% (w/w) emulsion ion, or about 5% (w/w) to about 20% (w/w) emulsion, or about 20% (w/w) to about 40% (w/w) emulsion, or about 25% (w/w) to about 35% (w/w) emulsion, or about 35% (w/w) to about 45% (w/w) emulsion, or about 35% (w/w) to about 40% (w/w) emulsion, or about 40% (w/w) to about 45% (w/w) emulsion, or about 45% (w/w) to about 50% (w/w) emulsion, or about 50% (w/w) to about 55% (w/w) emulsion.

The binding agent used in the methods of the present invention may be any compound or composition suitable for sufficiently binding and/or solidifying the composition such that it may assist in, or enhance, the formation of a solid, semi-solid or particulated meat-substitute product. The binding agent may be any suitable agent that does not substantially or negatively change the properties or flavour of the mushroom-based meat substitute of the invention. The binding agent may be a non-aqueous phase binder and may be a carbohydrate-rich, protein-rich or lipid-rich binding agent. It would be understood that many of the compounds or components that could be used as an emulsifier, may also be suitable for use as the binding agent, in that the mushroom-based meat substitute may comprise a substance that is used in the formation of the emulsion, that is also used outside of the emulsion step as a binding agent. For example, the mushroom-based meat substitute may comprise a lecithin-comprising heterogenous substance in the emulsion, and may also comprise a lecithin-comprising heterogenous substance as a binding agent, such as, for example, isolated soy protein. In other embodiments, the binding agent may be included as part of the emulsion prior to combining with the mushroom material. The binding agent may be lipid-rich, phospholipid rich, carbohydrate rich and/or protein rich, or combinations thereof. Preferably, the binding agent is a naturally occurring and/or naturally derived binding agent.

The binding agent may be a carbohydrate-rich binding agent such as cellulose, carrageenin, xantham, starch, pectin or alginin. In embodiments of the invention, the binding agent is arrowroot powder, potato/rice/chickpea/almond flour, tapioca starch, corn starch or combinations thereof, or any other flour from a starchy vegetable.

In other embodiments, the binding agent is a lipid-rich binding agent. Non-limiting examples of lipid-rich binding agents include cocoa butter, nut butter, seed butter, coconut oil, beeswax and hydrogenated castor oil, also known as carbowax and/or PEG-40, or combinations thereof.

In further embodiments, the binding agent is a protein-rich binding agent. Non-limiting examples of protein-rich binding agents include isolated soy protein, casein, whey protein, collagen, egg white, gelatine, or combinations thereof. Preferably, if a protein-rich binding agent is used, the binding agent is not animal derived.

In preferred embodiments of the invention, the binding agent may comprise any mixture of any number of different binding agents. In preferred embodiments, the mushroom-based meat substitute may comprise at least 0.5% (w/w), at least 1% (w/w), at least 2% (w/w), at least 5% (w/w), or at least 10% (w/w) total binding agent. In preferred embodiments of the invention, the mushroom-based meat substitute may comprise the binding agent at a concentration of about .5%% (w/w) to about 10% (w/w). More preferably, the mushroom-based meat substitute comprises isolated soy protein and/or tapioca starch and/or cocoa butter and/or coconut oil at a total concentration of about 5% (w/w) to about 15% (w/w), or about 1% (w/w) to about 10% (w/w), or about 0.5% (w/w) to about 5% (w/w), or about 3% (w/w) to about 5% (w/w), or about 1% (w/w) to about 3% (w/w).

In embodiments of the invention, the mushroom-based meat-substitute is prepared by first preparing a raw mushroom-based meat substitute comprising the mushroom material and the emulsion to produce a raw mushroom-based meat substitute. In these embodiments, the mushroom-based meat substitute may comprise at least about 2% (w/w) emulsion, and at least about 60% (w/w) mushroom material, or at least about 5% (w/w) emulsion, and at least about 70% (w/w) mushroom material, or at least about 20% (w/w) emulsion, and at least about 30% (w/w) mushroom material, or at least about 30% (w/w) emulsion, and at least about 30% (w/w) mushroom material, or at least about 40% (w/w) emulsion, and at least about 40% (w/w) mushroom material, or at least about 20% (w/w) emulsion, and at least about 40% (w/w) mushroom material, or at least about 40% (w/w) emulsion, and at least about 30% (w/w) mushroom material.

In other embodiments of the invention, the mushroom-based meat substitute may comprise about 5% (w/w) to about 10% (w/w) emulsion, and about 60% (w/w) to about 95% (w/w) mushroom material, or about 5% (w/w) to about 15% (w/w) emulsion, and about 30% to about 60% (w/w) mushroom material, or about 5% (w/w) to about 25% (w/w) emulsion, and about 50% (w/w) to about 90% (w/w) mushroom material, or about 20% (w/w) to about 60% (w/w) emulsion, and about 30% (w/w) to about 60% (w/w) mushroom material, or about 30% (w/w) to about 50% (w/w) emulsion, and about 30% (w/w) to about 50% (w/w) mushroom material, or about 40% (w/w) to about 50% (w/w) emulsion, and about 40% (w/w) to about 50% (w/w) mushroom material, or about 20% (w/w) to about 40% (w/w) emulsion, and about 40% (w/w) to about 60% (w/w) mushroom material, or about 40% (w/w) to 60% (w/w) emulsion, and about 30% (w/w) to about 40% (w/w) mushroom material, or about 50% (w/w) to 60% (w/w) emulsion, and about 40% (w/w) to about 50% (w/w) mushroom material, or about 40% (w/w) to 50% (w/w) emulsion, and about 30% (w/w) to about 40% (w/w) mushroom material.

In other embodiments of the invention, the mushroom-based meat-substitute is prepared by first preparing a raw mushroom-based meat substitute comprising the mushroom material and the binding agent to produce a raw mushroom-based meat substitute. In these embodiments, the mushroom-based meat substitute may comprise at least about 0.5% (w/w) binding agent, and at least about 30% (w/w) mushroom material, or at least about 0.5% (w/w) binding agent, and at least about 40% (w/w) mushroom material, or at least about 2% (w/w) binding agent, and at least about 30% (w/w) mushroom material, or at least about 2% (w/w) binding agent, and at least about 40% (w/w) mushroom material, or at least about 5% (w/w) binding agent, and at least about 40% (w/w) mushroom material, or at least about 10% (w/w) binding agent, and at least about 40% (w/w) mushroom material, or at least about 5% (w/w) binding agent, and at least about 60% (w/w) mushroom material, or at least about 10% (w/w) binding agent, and at least about 80% (w/w) mushroom material.

In other embodiments of the invention, the mushroom-based meat substitute may comprise about 0.5% (w/w) to about 10% (w/w) binding agent, and about 30% (w/w) to about 60% (w/w) mushroom material, or about 1% (w/w) to about 5% (w/w) binding agent, and at about 30% (w/w) to about 50% (w/w) mushroom material, or about 0.5% (w/w) to about 5% (w/w) binding agent, and about 40% (w/w) to about 90% (w/w) mushroom material, or about 2% (w/w) to about 10% (w/w) binding agent, and about 40% to about 80% (w/w) mushroom material, or about 1% (w/w) to about 5% (w/w) binding agent, and about 30% (w/w) to about 40% (w/w) mushroom material, or about 1% (w/w) to about 10% (w/w) binding agent, and about 40% (w/w) to about 50% (w/w) mushroom material, or about 1% (w/w) to about 5% (w/w) binding agent, and about 60% (w/w) to about 90% (w/w) mushroom material.

In embodiments of the invention, the mushroom-based meat-substitute is prepared by first preparing a raw mushroom-based meat substitute comprising the mushroom material, the emulsion and the binding agent to produce a raw mushroom-based meat substitute. In these embodiments, the mushroom-based meat substitute may comprise at least about 0.5% (w/w) binding agent, and at least about 30% (w/w) mushroom material, and at least about 10% (w/w) emulsion, or at least about 3% (w/w) binding agent, and at least about 50% (w/w) mushroom material, and at least about 20% (w/w) emulsion, or at least about 4% (w/w) binding agent, and at least about 60% (w/w) mushroom material, and at least about 20% (w/w) emulsion, or at least about 5% (w/w) binding agent, and at least about 80% (w/w) mushroom material, and at least about 10% (w/w) emulsion.

According to the invention the mushroom-based meat substitute comprises about 0.5% to about 5% (w/w) binding agent, and about 30% to about 95% (w/w) mushroom material, and about 2% to about 60% (w/w) emulsion. In other embodiments, the mushroom-based meat substitute may comprise about 0.5% to about 10% (w/w) binding agent, and about 30% to about 95% (w/w) mushroom material, and about 10% to about 60% (w/w) emulsion, or about 2% to about 8% (w/w) binding agent, and about 30% to about 70% (w/w) mushroom material, and about 30% to about 60% (w/w) emulsion, or about 2% to about 4% (w/w) binding agent, and about 50% to about 90% (w/w) mushroom material, and about 20% to about 40% (w/w) emulsion, or about 2% to about 4% (w/w) binding agent, and about 60% to about 80% (w/w) mushroom material, and about 2% to about 5% (w/w) emulsion.

By "raw meat substitute" or "raw mushroom-based meat substitute" as used herein is meant a mixture comprising the emulsion and/or binding agent, and mushroom material, wherein the mixture has yet to be formed, retorted and/or subjected to temperatures in excess of 60°C, though the mushroom material in the raw mushroom-based meat substitute may have undergone a forming or retorting process and/or subjected to temperatures in excess of 60°C prior to being combined with the emulsion and/or the binding agent to form the raw mushroom-based meat substitute.

In embodiments of the present invention wherein the raw mushroom-based meat substitute may comprise mushroom material that has been exposed to a forming or retorting process prior to combining with the binding agent and/or the emulsion, and the raw mushroom-based meat substitute is not exposed to any further forming or retorting processes, the raw mushroom-based meat substitute may also be deemed a mushroom-based meat substitute according to the invention.

The step of preparing the raw mushroom-based meat substitute in the method of the invention may be achieved by any suitable means of mixing the emulsion and/or the binding agent, and mushroom material, as herein described. The components may be mixed in any order, though preferably, if the emulsion is present, the emulsion is combined with the mushroom material prior to combining with the binding agent.

The raw mushroom-based meat substitute may comprise additional components, such as, but not limited to, additional liquid, flavours, seasonings, preservatives, protein extracts, vegetables, or combinations thereof.

The preservative may be any substance that assists in the prevention of microbial growth and degradation of the composition. The preservative may be an anti-microbial or an antioxidant, and these may include components such as salt, herbaceous extracts, sugar, vinegar, parabens, or combinations thereof. In preferred embodiments of the invention, the compositions may comprise a preservative at a concentration of about 0.1% (w/w) to about 10% (w/w). More preferably, the compositions may comprise a preservative at a concentration of about 0.25% (w/w) to about 5% (w/w).

The additional components may be added to the emulsion, or to the binding agent, or to the mushroom material, or to the combined emulsion and mushroom material, or to the combined mushroom material and binding agent, or to the combined mushroom material, emulsion and binding agent. In embodiments wherein the mushroom material is exposed to a retorting or forming process prior to combining with the emulsion and/or binding agent, the additional components may be added to the mushroom material before it is exposed to a forming or retorting process.

The optional forming process of the method of the present invention is a multi-stage process by which the mushroom material and/or raw mushroom-based meat substitute is first fashioned or moulded into appropriate shapes, particles or conformations, and is then secondly subjected to high heat for short durations. The second stage of the forming process assists in the flavour, colour and texture development of the mushroom-based meat substitute, and in particular, the texture and flavour of the surface of the formed mushroom-based meat substitute or the external surface area of the mushroom material, such that it more closely resembles the eating experience of real meat and meat products.

In embodiments of the invention, in a first stage of the forming process, the raw mushroom-based meat substitute or mushroom material is fashioned or moulded into shapes resembling, for example, patties, sausages, rashers, roasts, steaks, loins, meatballs, meatloaves, ribs, nuggets, strips, and the like. In other embodiments, in one stage of the forming process, the raw mushroom-based meat substitute or mushroom material may be processed through a mincer or extruder to form a mince-like mushroom-based meat substitute, or may be loosened or shredded to form a pulled mushroom-based meat substitute, or may be formed into chunks or cubes or the like. It would be understood the choice of mushroom and mushroom part would influence the type of mushroom-based meat substitute being produced by the method of the invention.

A second optional stage of the optional forming process of the method of the invention requires that the fashioned or moulded raw mushroom-based meat substitute is subjected to a flash frying/cooking step (the high heat for a short duration as mentioned above) which effectively results in "seared" outer surfaces of the formed mushroom-based meat substitute. It is proposed that the high temperature induces the production of desirable flavour compounds as a result of the Maillard reaction between free reactive amino groups of specific amino acids and reducing sugars present in the raw mushroom-based meat substitute. The temperature refers to the temperature of the oil, oven, pan or fryer being employed to fry/cook the fashioned or moulded raw mushroom-based meat substitute.

In embodiments of the invention, the first and second stage of the forming process are performed sequentially, while in other embodiments, the first and second stage of the forming process are separated by an intermediary process step. For example, the mushroom material may undergo the first stage of the forming process in that it is processed through a mincer or extruder, before combining the mince/extruded mushroom material with the binding agent and/or emulsion and exposing the mixture to the second stage of the forming process to produce a formed mushroom-based meat substitute. In another example, the mushroom material is first combined with the binding agent and/or emulsion, is fashioned or moulded into patties in the first stage of the forming process, and then exposed to the second stage of the forming process to produce a formed mushroom-based meat substitute. In a further example, the mushroom material may be shredded as the first stage of the forming process and then subjected to high heat for a short duration as the second stage of the forming process prior to combining with the binding agent and/or emulsion to produce the formed (albeit, raw) mushroom-based meat substitute (wherein this formed/raw mushroom-based meat substitute may be deemed a mushroom-based meat substitute of the invention if it is not subjected to any further forming or retorting processes).

Preferably, the forming process is employed with respect to a raw mushroom-based meat substitute or a retorted mushroom-based meat substitute for mushroom-based meat substitute products that are to be packaged and sold as pre-formed, pre-cooked, par-formed or par-cooked products. In embodiments where the forming process is employed with respect to the mushroom material prior to combining with the binding agent and/or emulsion to form the raw mushroom-based meat substitute, this product may preferably be sold as an uncooked or par-cooked product, though this "raw" mushroom-based meat substitute would be deemed a mushroom-based meat substitute according to the invention.

The temperature used in the second stage of the forming step, and the duration of high heat exposure, will depend on the mushroom-based meat substitute being produced, but is at least 120°C, and the duration is at least 30 seconds. In other embodiments of the invention, the temperature used in the second stage of the forming step is at least 130°C, or at least 140°C, or at least 150°C or at least 160°C. In preferred embodiments of the invention, the temperature used in the second stage of the forming step is at least 160°C, and the duration is at least 5 seconds, at least 15 seconds, at least 30 seconds, or at least 45 seconds.

The retorting step of the method of the present invention may be facilitated by any suitable retorting method, using any suitable type of retort, and may be used on the mushroom material, the raw mushroom-based meat substitute or a formed mushroom-based meat substitute to produce a desirable effect on the final mushroom-based meat substitute of the invention. The formed mushroom-based meat substitute, or raw mushroom-based meat substitute, or mushroom material would be packaged in any suitable manner prior to the retorting, though the packaging would generally be hermetically sealed. The choice of retorting method and retort (as well as time and temperature employed) will be influenced by, for example, the type of mushroom-based meat substitute being produced by the method of the invention, cost considerations, the holding temperature (the temperature a product can withstand before it loses its food qualities) of the particular mushroom-based meat substitute, the chosen packaging container, whether the retorting step is being performed on the mushroom material, a formed mushroom-based meat substitute or a raw mushroom-based meat substitute, and/or production volumes.

It would be understood a retort can generally be categorised as a pressure vessel for conducting a thermal process to destroy food pathogens, directed at foods that have been packaged and hermetically sealed. As used in the method of the present invention, the retorting step requires that the mushroom material, or the raw mushroom-based mushroom material or formed and packaged mushroom-based meat substitute is subjected to temperatures of about 121°C to 141 °, preferably about 121°C to 131°C, or more preferably about 121°C to 126°C, for at least about 5 minutes, or at least about 10 minutes or at least about 15 minutes.

Non-limiting examples of suitable retorting methods include water immersion retorting, saturated steam retorting, steam air retorting, water cascading retorting, water shower retorting, water spray retorting, oscillating and/or shaking retorting. Preferably, the retorting step is a steam retorting step, including forms of steam water and steam air retorting, which may be performed with or without oscillating and/or shaking. It would be understood that a retorting step is generally characterised by high pressure. In preferred embodiments of the invention, the retorting step is performed using a steam retort set at 121°C for at least 15 minutes, to produce the mushroom-based meat substitute.

Preferably, the retorting process is employed with respect to a raw mushroom-based meat substitute or a formed mushroom-based meat substitute for mushroom-based meat substitute products that are to be packaged and sold as pre-formed, pre-cooked, par-formed or par-cooked products. In embodiments where the retorting process is employed with respect to the mushroom material prior to combining with the binding agent and/or emulsion to form the raw mushroom-based meat substitute, this product may preferably be sold as an uncooked or par-cooked product, though this "raw" mushroom-based meat substitute would be deemed a mushroom-based meat substitute according to the invention.

Without wishing to be bound by theory, it is proposed that the high temperature and pressure of the retorting step has an effect on the physiochemical properties (viscosity, consistency, texture etc) and palatability (flavour, smell, colour, mouthfeel etc) of the mushroom-based meat substitute. In particular, it is proposed that under the high temperature and pressure of retorting, desirable flavour compounds can develop as a result of the Maillard reaction between free reactive amino groups of specific amino acids and reducing sugars present in the mushroom-based meat substitute. The desirable effects of the retort process can be imparted on the mushroom-based meat substitute irrespective of whether the retort process is performed with respect to the raw mushroom-based meat substitute or the formed mushroom-based meat substitute or the mushroom material.

In embodiments of the invention, the mushroom-based meat-substitute is prepared by preparing a raw mushroom-based meat substitute comprising the mushroom material and the emulsion to produce a raw mushroom-based meat substitute, wherein the mushroom-based meat substitute may comprise at least about 20% (w/w) emulsion, and at least about 30% (w/w) mushroom material, and wherein the raw mushroom-based meat substitute is exposed to a forming process, and the formed mushroom-based meat substitute is exposed to a retorting process. In further embodiments of the invention, the mushroom-based meat-substitute is prepared by preparing a raw mushroom-based meat substitute comprising the mushroom material and the emulsion to produce a raw mushroom-based meat substitute, wherein the mushroom-based meat substitute may comprise at least about 20% (w/w) emulsion, and at least about 30% (w/w) mushroom material, and wherein the mushroom material is exposed to a forming process prior to mixing the formed mushroom material with the emulsion to produce a raw mushroom-based meat substitute, and the raw mushroom-based meat substitute is exposed to a retorting process. In other embodiments of the invention, the mushroom-based meat-substitute is prepared by preparing a raw mushroom-based meat substitute comprising the mushroom material and the emulsion to produce a raw mushroom-based meat substitute, wherein the mushroom-based meat substitute may comprise at least about 20% (w/w) emulsion, and at least about 30% (w/w) mushroom material, and wherein the mushroom material is exposed to a retorting process prior to mixing the retorted mushroom material with the emulsion to produce a raw mushroom-based meat substitute, and the raw mushroom-based meat substitute is exposed to a forming process.

In embodiments of the invention, the mushroom-based meat-substitute is prepared by preparing a raw mushroom-based meat substitute comprising the mushroom material and the emulsion to produce a raw mushroom-based meat substitute, wherein the mushroom-based meat substitute may comprise about 10% (w/w) to about 60% (w/w) emulsion, and about 30% (w/w) to about 95% (w/w) mushroom material, and wherein the raw mushroom-based meat substitute is exposed to a forming process, and the formed mushroom-based meat substitute is exposed to a retorting process. In further embodiments of the invention, the mushroom-based meat-substitute is prepared by preparing a raw mushroom-based meat substitute comprising the mushroom material and the emulsion to produce a raw mushroom-based meat substitute, wherein the mushroom-based meat substitute may comprise about 10% (w/w) to about 60% (w/w) emulsion, and about 30% (w/w) to about 95% (w/w) mushroom material, and wherein the mushroom material is exposed to a forming process prior to mixing the formed mushroom material with the emulsion to produce a raw mushroom-based meat substitute, and the raw mushroom-based meat substitute is exposed to a retorting process. In other embodiments of the invention, the mushroom-based meat-substitute is prepared by preparing a raw mushroom-based meat substitute comprising the mushroom material and the emulsion to produce a raw mushroom-based meat substitute, wherein the mushroom-based meat substitute may comprise about 10% (w/w) to about 60% (w/w) emulsion, and about 30% (w/w) to about 95% (w/w) mushroom material, and wherein the mushroom material is exposed to a retorting process prior to mixing the retorted mushroom material with the emulsion to produce a raw mushroom-based meat substitute, and the raw mushroom-based meat substitute is exposed to a forming process.

In other embodiments of the invention, the mushroom-based meat-substitute is prepared by preparing a raw mushroom-based meat substitute comprising the mushroom material and the binding agent to produce a raw mushroom-based meat substitute. In these embodiments, the mushroom-based meat substitute may comprise at least about 2% (w/w) binding agent, and at least about 30% (w/w) mushroom material, and wherein the raw mushroom-based meat substitute is exposed to a forming process, and the formed mushroom-based meat substitute is exposed to a retorting process. In further embodiments of the invention, the mushroom-based meat-substitute is prepared by preparing a raw mushroom-based meat substitute comprising the mushroom material and the binding agent to produce a raw mushroom-based meat substitute, wherein the mushroom-based meat substitute may comprise at least about 2% (w/w) binding agent, and at least about 30% (w/w) mushroom material, and wherein the mushroom material is exposed to a forming process prior to mixing the formed mushroom material with the binding to produce a raw mushroom-based meat substitute, and the raw mushroom-based meat substitute is exposed to a retorting process. In other embodiments of the invention, the mushroom-based meat-substitute is prepared by preparing a raw mushroom-based meat substitute comprising the mushroom material and the binding agent to produce a raw mushroom-based meat substitute, wherein the mushroom-based meat substitute may comprise at least about 2% (w/w) binding agent, and at least about 30% (w/w) mushroom material, and wherein the mushroom material is exposed to a retorting process prior to mixing the retorted mushroom material with the binding agent to produce a raw mushroom-based meat substitute, and the raw mushroom-based meat substitute is exposed to a forming process.

In other embodiments of the invention, the mushroom-based meat-substitute is prepared by preparing a raw mushroom-based meat substitute comprising the mushroom material and the binding agent to produce a raw mushroom-based meat substitute. In these embodiments, the mushroom-based meat substitute may comprise at about 0.5% (w/w) to about 5% (w/w) binding agent, and about 30% (w/w) to about 95% (w/w) mushroom material, and wherein the raw mushroom-based meat substitute is exposed to a forming process, and the formed mushroom-based meat substitute is exposed to a retorting process. In further embodiments of the invention, the mushroom-based meat-substitute is prepared by preparing a raw mushroom-based meat substitute comprising the mushroom material and the binding agent to produce a raw mushroom-based meat substitute, wherein the mushroom-based meat substitute may comprise at about 0.5% (w/w) to about 5% (w/w) binding agent, and about 30% (w/w) to about 95% (w/w) mushroom material, and wherein the mushroom material is exposed to a forming process prior to mixing the formed mushroom material with the binding to produce a raw mushroom-based meat substitute, and the raw mushroom-based meat substitute is exposed to a retorting process. In other embodiments of the invention, the mushroom-based meat-substitute is prepared by preparing a raw mushroom-based meat substitute comprising the mushroom material and the binding agent to produce a raw mushroom-based meat substitute, wherein the mushroom-based meat substitute may comprise at about 0.5% (w/w) to about 5% (w/w) binding agent, and about 30% (w/w) to about 95% (w/w) mushroom material, and wherein the mushroom material is exposed to a retorting process prior to mixing the retorted mushroom material with the binding agent to produce a raw mushroom-based meat substitute, and the raw mushroom-based meat substitute is exposed to a forming process.

In embodiments of the invention, the mushroom-based meat-substitute is prepared by preparing a raw mushroom-based meat substitute comprising the mushroom material, the emulsion and the binding agent to produce a raw mushroom-based meat substitute. In these embodiments, the mushroom-based meat substitute may comprise at least about 2% (w/w) binding agent, at least about 20% (w/w) emulsion, and at least about 30% (w/w) mushroom material, and wherein the raw mushroom-based meat substitute is exposed to a forming process, and the formed mushroom-based meat substitute is exposed to a retorting process.

In further embodiments of the invention, the mushroom-based meat-substitute is prepared by preparing a raw mushroom-based meat substitute comprising the mushroom material, the emulsion and the binding agent to produce a raw mushroom-based meat substitute, wherein the mushroom-based meat substitute may comprise at least about 2% (w/w) binding agent, at least 20% (w/w) emulsion and at least about 30% (w/w) mushroom material, and wherein the mushroom material is exposed to a forming process prior to mixing the formed mushroom material with the emulsion and the binding agent to produce a raw mushroom-based meat substitute, and the raw mushroom-based meat substitute is exposed to a retorting process.

In other embodiments of the invention, the mushroom-based meat-substitute is prepared by preparing a raw mushroom-based meat substitute comprising the mushroom material, the emulsion and the binding to produce a raw mushroom-based meat substitute, wherein the mushroom-based meat substitute may comprise at least about 2% (w/w) binding agent, at least 20% (w/w) emulsion and at least about 30% (w/w) mushroom material, and wherein the mushroom material is exposed to a retorting process prior to mixing the retorted mushroom material with the emulsion and the binding agent to produce a raw mushroom-based meat substitute, and the raw mushroom-based meat substitute is exposed to a forming process.

In embodiments of the invention, the mushroom-based meat-substitute is prepared by preparing a raw mushroom-based meat substitute comprising the mushroom material, the emulsion and the binding agent to produce a raw mushroom-based meat substitute. In these embodiments, the mushroom-based meat substitute may comprise at about 0.5% (w/w) to about 5% (w/w) binding agent, about 10% (w/w) to about 60% (w/w) emulsion, and about 30% (w/w) to about 95% (w/w) mushroom material, and wherein the raw mushroom-based meat substitute is exposed to a forming process, and the formed mushroom-based meat substitute is exposed to a retorting process.

In further embodiments of the invention, the mushroom-based meat-substitute is prepared by preparing a raw mushroom-based meat substitute comprising the mushroom material, the emulsion and the binding agent to produce a raw mushroom-based meat substitute, wherein the mushroom-based meat substitute may comprise at about 0.5% (w/w) to about 5% (w/w) binding agent, about 10% (w/w) to about 60% (w/w) emulsion, and about 30% (w/w) to about 95% (w/w) mushroom material, and wherein the mushroom material is exposed to a forming process prior to mixing the formed mushroom material with the emulsion and the binding agent to produce a raw mushroom-based meat substitute, and the raw mushroom-based meat substitute is exposed to a retorting process.

In other embodiments of the invention, the mushroom-based meat-substitute is prepared by preparing a raw mushroom-based meat substitute comprising the mushroom material, the emulsion and the binding to produce a raw mushroom-based meat substitute, wherein the mushroom-based meat substitute may comprise at about 0.5% (w/w) to about 5% (w/w) binding agent, about 10% (w/w) to about 60% (w/w) emulsion, and about 30% (w/w) to about 95% (w/w) mushroom material, and wherein the mushroom material is exposed to a retorting process prior to mixing the retorted mushroom material with the emulsion and the binding agent to produce a raw mushroom-based meat substitute, and the raw mushroom-based meat substitute is exposed to a forming process.

In embodiments of the invention, the mushroom-based meat-substitute is prepared by preparing a raw mushroom-based meat substitute comprising the mushroom material, the emulsion and the binding agent to produce a raw mushroom-based meat substitute. In these embodiments, the mushroom-based meat substitute may comprise at about 0.5% (w/w) to about 8% (w/w) binding agent, about 2% (w/w) to about 50% (w/w) emulsion, and about 30% (w/w) to about 70% (w/w) mushroom material, and wherein the raw mushroom-based meat substitute is exposed to a forming process, and the formed mushroom-based meat substitute is exposed to a retorting process.

In further embodiments of the invention, the mushroom-based meat-substitute is prepared by preparing a raw mushroom-based meat substitute comprising the mushroom material, the emulsion and the binding agent to produce a raw mushroom-based meat substitute, wherein the mushroom-based meat substitute may comprise at about 0.5% (w/w) to about 8% (w/w) binding agent, about 2% (w/w) to about 50% (w/w) emulsion, and about 30% (w/w) to about 70% (w/w) mushroom material, and wherein the mushroom material is exposed to a forming process prior to mixing the formed mushroom material with the emulsion and the binding agent to produce a raw mushroom-based meat substitute, and the raw mushroom-based meat substitute is exposed to a retorting process.

In other embodiments of the invention, the mushroom-based meat-substitute is prepared by preparing a raw mushroom-based meat substitute comprising the mushroom material, the emulsion and the binding to produce a raw mushroom-based meat substitute, wherein the mushroom-based meat substitute may comprise at about 0.5% (w/w) to about 8% (w/w) binding agent, about 2% (w/w) to about 50% (w/w) emulsion, and about 30% (w/w) to about 70% (w/w) mushroom material, and wherein the mushroom material is exposed to a retorting process prior to mixing the retorted mushroom material with the emulsion and the binding agent to produce a raw mushroom-based meat substitute, and the raw mushroom-based meat substitute is exposed to a forming process.

Retorting and forming processes as defined herein are known to be employed in food manufacturing processes, but the processes are often detrimental to the palatability of the food product due to the undesirable effect the retorting may have on the binding agents used in the food products, and/or the unpleasant, aroma-intensive flavour compounds typically produced when the Maillard reaction occurs when manufacturing meat or vegetable products. As such, the negative outcomes associated with, in particular, a retorting process that induces a Milliard reaction, can often outweigh the beneficial outcomes.

However, despite this, the inventors have surprisingly found that, due to the mushroom material used in the methods of the invention having a unique cellular structure that is less susceptible to degradation during a retorting or forming process, the mushroom-based meat substitute of the present invention does not exhibit the typical negative effects of the milliard reaction. It would be understood that the surprising and desirable attributes associated with the forming and retorting processes used in the methods of the present invention may be achieved by using the forming or retorting process as any stage of the method provided the forming or retorting process is performed on a product comprising the mushroom material.

The method of the invention comprises at least a retorting process and optionally a forming process, wherein the mushroom material or a raw mushroom-based meat substitute is exposed to a forming process, and/or the mushroom material, or a raw mushroom-based meat substitute, or a formed mushroom-based meat substitute is exposed to a retorting process. In preferred embodiments of the invention, method comprises at least a retorting process performed on the mushroom material, a raw mushroom-based meat substitute, or a raw mushroom-based meat substitute that has at least been fashioned or moulded into an appropriate shape, particle or conformation. In preferred embodiments of the invention, the method comprises a forming process and a retorting process, and the forming process and retorting process can be performed at any stage of the method on one or more of the mushroom material, the raw mushroom-based meat substitute, and/or the formed mushroom-based meat substitute, and in any order. For example, in embodiments of the invention, a forming process may be performed after a retorting process or before a retorting process.

The method of the present invention may comprise additional steps, such as, but not limited to, cleaning of the mushrooms or parts thereof prior to hydration, which may be done manually or by industrial means. The method may also comprise additional temperature dependent steps, such as heating, steaming, sous vide, cooling and/or freezing, as well as the required packaging steps, and these may be performed at any stage during the method of the invention as desired or as appropriate. The additional steps may include various processing steps that rely on high pressure (including high positive pressure and negative pressure) and/or high temperatures and may contribute to the flavour of the product and/or may serve as an anti-microbial processing step.

In a second aspect of the present invention, there is provided the mushroom-based meat substitute produced by any of the methods of the invention. In embodiments of the invention, the mushroom-based meat substitute encompasses a raw mushroom-based meat substitute wherein the mushroom material has been subjected to an optional forming, and a retorting process prior to being combined the binding agent and/or the emulsion. In other embodiments of the invention, the mushroom-based meat substitute encompasses a pre-cooked or par-cooked mushroom-based meat substitute wherein the mushroom material has been subjected to an optional forming, and a retorting process, prior to being combined the binding agent and/or the emulsion to produce a raw mushroom-based meat substitute, and the raw mushroom-based meat substitute has further been exposed to a forming process and/or a retorting process.

### Definitions

In compliance with the statute, the invention has been described in language more or less specific to structural or methodical features. The term "comprises" and its variations, such as "comprising" and "comprised of" is used throughout in an inclusive sense and not to the exclusion of any additional features.

Throughout the specification and claims (if present), unless the context requires otherwise, the terms "substantially", "at least" or "about" will be understood to not be limited to the value for the range qualified by the terms. For example, the term "about" may encompass a range of ± 10% of the cited value.

### Detailed description of the invention

### Mushroom-based meat substitute

In the below described example formulations, the emulsion comprises a 1:5:1 ratio of isolated soy protein (emulsifier): water (polar liquid): coconut oil (carrier oil). The mushroom material substantially comprises mushroom stem. Example 1 to 3 and 7 below comprise an emulsifier comprising about 14.3% (w/v) isolated soy protein, about 71.4% (w/v) water and about 14.3% (w/v) coconut oil.

Mushroom-based meat substitute Example 1 - Mince patty mushroom-based meat substitute

| *Ingredient* | *Category* | *Percentage(w*/*w)* |
|---|---|---|
| Emulsion | Emulsion | 48.73% |
| Mushroom | Mushroom material | 42.70% |
| Isolated soy protein | Binding agent | 2.33% |
| Yeast Extract | Flavour | 0.69% |
| Cocoa Butter | Binding agent | 1.93% |
| Soy Sauce | Flavour | 0.32% |
| Onion Powder | Flavour | 0.50% |
| Garlic Powder | Flavour | 0.26% |
| Tomato Paste | Flavour | 2.34% |
| Liquid Smoke | Flavour | 0.20% |

Mushroom-based meat substitute Example 2 - Brisket style patty mushroom-based meat substitute

| *Ingredient* | *Category* | *Percentage (w*/*w)* |
|---|---|---|
| Emulsion | Emulsion | 50.07% |
| Mushroom | Mushroom material | 43.87% |
| Isolated soy protein | Binding agent | 2.39% |
| Yeast Extract | Flavour | 0.71% |
| Cocoa Butter | Binding agent | 0.00% |
| Soy Sauce | Flavour | 0.34% |
| Onion Powder | Flavour | 0.51% |
| Garlic Powder | Flavour | 0.26% |
| Tomato Paste | Flavour | 1.45% |
| Liquid Smoke | Flavour | 0.406% |

Mushroom-based meat substitute Example 3 - Minced mushroom-based meat substitute

| *Ingredient* | *Category* | *Percentage (w*/*w)* |
|---|---|---|
| Emulsion | Emulsion | 44.55% |
| Mushroom | Mushroom material | 39.09% |
| Isolated soy protein | Binding agent | 2.13% |
| Yeast Extract | Flavour | 0.64% |
| Soy Sauce | Flavour | 0.31% |
| Onion Powder | Flavour | 0.46% |
| Garlic Powder | Flavour | 0.22% |
| Tomato Paste | Flavour | 2.11% |
| Liquid Smoke | Flavour | 0.20% |
| Water | Liquid | 10.29% |

Mushroom-based meat substitute Example 4 - Slow cooked mushroom-based meat substitute

| *Ingredient* | *Category* | *Percentage (w*/*w)* |
|---|---|---|
| Yeast Extract | Flavour | 0.56 |
| Sugar | Flavour | 2.06 |
| Tapioca starch | Binding agent | 1.88 |
| Salt | Flavour | 0.19 |
| White pepper | Flavour | 0.11 |
| Black pepper | Flavour | 0.09 |
| Isolated soy protein | Binding agent | 5.87 |
| Gluten Free Soy Sauce | Flavour | 0.94 |
| Hydrated Mushroom | Mushroom material | 44.3 |
| RBD Coconut oil | Flavour | 5.64 |
| Emulsion | Emulsion | 26.62 |
| Water | Liquid | 11.74 |
| | | |

| *EMULSION of Example 4* | *% of emulsion* | *% of total* |
|---|---|---|
| Isolated soy protein | 13.6 | 3.62 |
| Salt | 0.5 | 0.13 |
| Sugar | 0.4 | 0.11 |
| Coconut oil | 16.3 | 4.34 |
| Water | 69.2 | 18.42 |
| Total | 100% | 26.62% |

Mushroom-based meat substitute Example 5 - Mince burger patty mushroom-based meat substitute

| *Ingredient* | *Category* | *Percentage (w*/*w)* |
|---|---|---|
| Emulsion | Emulsion | 47.90% |
| Hydrated Mushroom Material 60-75% MC | Mushroom material | 42.00% |
| Isolated soy protein | Binding agent | 2.70% |
| soy sauce | Flavour | 0.40% |
| Salt | Flavour | 0.50% |
| Onion | Flavour | 0.60% |
| Garlic | Flavour | 0.30% |
| Smoke | Flavour | 0.20% |
| yeast extract | Flavour | 0.80% |
| Tomato | Flavour | 0.20% |
| Fat | Moisture | 4.40% |
| | | |

| *EMULSION of Example 5* | *% of emulsion* | *% of total* |
|---|---|---|
| Isolated soy protein | 14.30% | 6.80% |
| Mushroom Liquid 2.5-8Brix | 71.40% | 34.20% |
| Fat | 14.30% | 6.80% |
| Total | 100% | 47.90% |

Mushroom-based meat substitute example 6 - Fresh mince mushroom-based meat substitute

| *Ingredient* | *Category* | *Percentage (w*/*w)* |
|---|---|---|
| Hydrated *Shiitake* | Mushroom material | 58.66% |
| Hydrated *Agaricus* | Mushroom material | 6.52% |
| Salt | Flavour | 0.51% |
| Onion | Flavour | 0.57% |
| Garlic | Flavour | 0.30% |
| Yeast x | Flavour | 0.80% |
| tomato powder | Flavour | 0.31% |
| Emulsion + Binding | Emulsion | 32.33% |
| | | |

| *Emulsion of Example 6* | *% of emulsion* | *% of total* |
|---|---|---|
| Agaricus liquid | 48.96% | 15.83% |
| Isolated soy protein | 12.02% | 3.89% |
| Fat | 35.18% | 11.37% |
| Flax | 2.32% | 0.75% |
| Smoke | 0.37% | 0.12% |
| Soy | 1.14% | 0.37% |

Mushroom-based meat substitute Example 7 - Roasted shaved mushroom-based meat substitute

| *Ingredient* | *Category* | *Percentage (w*/*w)* |
|---|---|---|
| RBD coconut oil colloidal emulsion | Emulsion | 2% |
| Flattened shitake | Mushroom material | 66.36% |
| Rice Flour | Binding agent | 2.13% |
| RDB coconut oil | Flavour/Moisture | 3.98% |
| Onion Powder | Flavour | 0.40% |
| Black pepper | Flavour | 0.33% |
| Salt | Flavour | 0.2% |
| Liquid Smoke | Flavour | 0.20% |
| Agaricus liquid | Liquid | 22.56% |

### Method of making different embodiments of mushroom-based meat substitutes of Example 1-6

To make the mushroom-based meat substitutes 1 through 7 the emulsion was first prepared using a high sheer emulsifier until the mixture combined to a smooth mass.

The mushroom material, which was primarily mushroom stem, or whole mushrooms, is washed first to removed foreign matter. The mushroom materials then were hydrated by a 30-minute par-cooking process before being dehydrated. The dehydration steps to remove the excess water was performed by a centrifugal dryer, for about 3-5 min.

For Example 4, the hydrated mushroom material was placed in a bowl cutter fitted with blunt knives, and shredded for 5-7 minutes, depending on the desired fibre to be formed in the process. For all other Examples1-3 and 5-6, the hydrated mushroom material was processed through a screw driven meat mincer, with the cutting plate ranging between 3-6mm. In some preferred embodiments of the invention, the desired ratio of 3mm to 6mm dice is 20% 3mm and 80% 6mm, wherein the 6 mm diced mushroom material was exposed to a retorting process to change the colour, texture and flavour of the ingredient beneficially prior to combing with the binding agent and emulsion.

For each of Examples 1 to 7, the hydrated, shredded, minced and/or retorted mushroom material was combined with emulsion and mixed for 1-2 minutes, prior to adding the binding agent, any water and remaining ingredients and mixing for another 2 minutes to produce the raw mushroom-based meat substitute. The mixing process is performed at temperatures below 35°C.

For the forming process of the burger patty versions of mushroom-based meat substitutes of Example 1, 2 and 5, the raw mushroom-based meat substitute was formed into uniform burger patty shapes with uniform masses in the first stage of the forming process. For the second stage of the forming process, a continuous frying application was used, with the oil temperature being at least 180°C (±5°C), to flash fry the patties for about 50 seconds to achieved the desired surface texture, flavour and colour for the patties.

For the forming process of the ball or chunk version of mushroom-based meat substitute of Example 4, the raw mushroom-based meat substitute was formed into uniform ball or chunk shapes with masses ranging from 7-20g in the first stage of the forming process. For the second stage of the forming process, a continuous frying application was used, with the oil temperature being at least 180°C (±5°C), to flash fry the pieces for about 50 seconds to achieve the desired surface texture, flavour and colour.

For the forming process of mushroom-based meat substitute of Example 3, the raw mushroom-based meat substitute was fed through a meat mincer directly in the continuous fryer set at 180°C (±5°C) and fired for about 30-40 seconds, such that the first and second stage of the forming process were essentially performed at the same time.

For the forming process of mushroom-based meat substitute of Example 6, the raw mushroom-based meat substitute was fed through a meat mincer with plate size 5-8mm to resemble freshly minced meat in the first stage of the forming process. This product was not subjected to the second stage of the forming process, though the mushroom material was retorted prior to being combined with the emulsion. The product was packaged into Modified Atmosphere Packaging, under a Gas flush to maintain food safety.

For the forming process of mushroom-based meat substitute of Example 6, the raw mushroom-based meat substitute was formed into flatten sheets in the first stage of the forming process. This product was not subjected to the second stage of the forming process, and the product was packaged into Modified Atmosphere Packaging, under a Gas flush to maintain food safety.

The formed mushroom-based meat substitutes of examples 1-7 were then allowed to drain and/or cool, before packaging into retort pouches, bags or trays. The formed, packaged mushroom-based meat substitutes were then retorted in a steam retort with a core temperature of 121°C for 15 minutes to ensure sterility produce additional flavours via the initiation of the Millard reaction.

The mushroom-based meat substitutes were then processed and packaged for sale.

## Claims

1. A method of preparing a mushroom-based meat substitute comprising about 30% w/w to about 95% w/w mushroom material, about 2% w/w to about 60% w/w emulsion and about 0.5% w/w to about 10% w/w binding agent, wherein the method comprises the steps of:
preparing a raw mushroom-based meat substitute comprising the mushroom material, the binding agent and the emulsion;
exposing the raw mushroom-based meat substitute to a forming process to produce a formed mushroom-based meat substitute;
exposing the formed mushroom-based meat substitute to a retorting process comprising the step of heating the raw mushroom-based meat substitute to a temperature of 121°C to 141°C for at least about 5 minutes in a hermetically sealed package;
wherein the mushroom material substantially comprises mushroom stem; and
wherein the retorting process induces a Maillard reaction.

2. The method of claim 1, wherein the mushroom material comprises shredded mushroom stem.

3. The method of claim 1 or claim 2, wherein the mushroom material comprises mushroom of the genera selected from the group consisting of *agaricus, lentinula, pleurotus, hericium, laetiporus, armillaria, pioppini, flammulina, hypsizygus, lyophyllum, canterellus,* or combinations thereof.

4. The method of any one of claims 1 to 3, wherein the emulsion comprises lecithin, water and a plant-derived oil.

5. The method of any one of claims 1 to 4, wherein the binding agent is a plant derived starch, fat or protein.

6. The method of any one of claims 1 to 5, wherein the temperature is 121°C to 126°C.

7. A method of preparing a mushroom-based meat substitute comprising about 30% w/w to about 95% w/w mushroom material, about 2% w/w to about 60% w/w emulsion and about 0.5% w/w to about 10% w/w binding agent, wherein the method comprises the steps of:
exposing the mushroom material to a forming process;
preparing a raw mushroom-based meat substitute comprising the formed mushroom material, the binding agent and the emulsion;
exposing the raw mushroom-based meat substitute to a retorting process comprising the step of heating the raw mushroom-based meat substitute to a temperature of 121°C to 141°C for at least about 5 minutes in a hermetically sealed package;
wherein the mushroom materially substantially comprises mushroom stem and;
wherein the retorting process induces a Maillard reaction.

8. The method of claim 7, wherein the mushroom material comprises shredded mushroom stem.

9. The method of claim 7 or claim 8, wherein the mushroom material comprises mushroom of the genera selected from the group consisting *of agaricus, lentinula, pleurotus, hericium, laetiporus, armillaria, pioppini, flammulina, hypsizygus, lyophyllum, canterellus,* or combinations thereof.

10. The method of any one of claims 7 to 9, wherein the emulsion comprises lecithin, water and a plant-derived oil.

11. The method of any one of claims 7 to 10, wherein the binding agent is a plant derived starch, fat or protein.

12. The method of any one of claims 7 to 11, wherein the temperature is 121°C to 126°C.

13. A method of preparing a mushroom-based meat substitute comprising about 30% w/w to about 95% w/w mushroom material, about 2% w/w to about 60% w/w emulsion and about 0.5% w/w to about 10% w/w binding agent, wherein the method comprises the steps of:
exposing the mushroom material to a retorting process comprising the step of heating the raw mushroom material to a temperature of 121°C to 141°C for at least about 5 minutes in a hermetically sealed package;
preparing a raw mushroom-based meat substitute comprising the retorted mushroom material, the binding agent and the emulsion;
exposing the raw mushroom-based meat substitute to a forming process;
wherein the mushroom material substantially comprises mushroom stem; and
wherein the retorting process induces a Maillard reaction.

14. The method of claim 13, wherein the mushroom material comprises shredded mushroom stem.

15. The method of any one of claims 13 to 14, wherein the temperature is 121°C to 126°C.

16. A mushroom based meat substitute produced by the method of any one of claims 1 to 15.

## Patentansprüche

1. Verfahren zur Herstellung eines pilzbasierten Fleischersatzes, umfassend etwa 30 Gew.-% bis etwa 95 Gew.-% Pilzmaterial, etwa 2 Gew.-% bis etwa 60 Gew.-% Emulsion und etwa 0,5 Gew.-% bis etwa 10 Gew.-% Bindemittel, wobei das Verfahren die Schritte umfasst:
Herstellen eines rohen pilzbasierten Fleischersatzes, umfassend das Pilzmaterial, das Bindemittel und die Emulsion;
Unterziehen des rohen pilzbasierten Fleischersatzes einem Formungsvorgang, um einen geformten pilzbasierten Fleischersatz zu produzieren;
Unterziehen des geformten pilzbasierten Fleischersatzes einem Retortensterilisationsvorgang, umfassend den Schritt eines Erhitzens des rohen pilzbasierten Fleischersatzes auf eine Temperatur von 121 °C bis 141 °C für mindestens etwa 5 Minuten in einer luftdicht verschlossenen Packung;
wobei das Pilzmaterial im Wesentlichen Pilzstiel umfasst und
wobei der Retortensterilisationsvorgang eine Maillard-Reaktion induziert.

2. Verfahren nach Anspruch 1, wobei das Pilzmaterial zerkleinerten Pilzstiel umfasst.

3. Verfahren nach Anspruch 1 oder Anspruch 2, wobei das Pilzmaterial Pilz der Gattung umfasst, die aus der Gruppe bestehend aus *Agaricus, Lentinula, Pleurotus, Hericium, Laetiporus, Armillaria, Pioppini, Flammulina, Hypsizygus, Lyophyllum, Canterellus* oder Kombinationen davon ausgewählt ist.

4. Verfahren nach einem der Ansprüche 1 bis 3, wobei die Emulsion Lecithin, Wasser und ein pflanzliches Öl umfasst.

5. Verfahren nach einem der Ansprüche 1 bis 4, wobei das Bindemittel eine pflanzliche Stärke, ein pflanzliches Fett oder ein pflanzliches Protein ist.

6. Verfahren nach einem der Ansprüche 1 bis 5, wobei die Temperatur 121 °C bis 126 °C beträgt.

7. Verfahren zur Herstellung eines pilzbasierten Fleischersatzes, umfassend etwa 30 Gew.-% bis etwa 95 Gew.-% Pilzmaterial, etwa 2 Gew.-% bis etwa 60 Gew.-% Emulsion und etwa 0,5 Gew.-% bis etwa 10 Gew.-% Bindemittel, wobei das Verfahren die Schritte umfasst:
Unterziehen des Pilzmaterials einem Formungsvorgang;
Herstellen eines rohen pilzbasierten Fleischersatzes, umfassend das geformte Pilzmaterial, das Bindemittel und die Emulsion;
Unterziehen des rohen pilzbasierten Fleischersatzes einem Retortensterilisationsvorgang, umfassend den Schritt eines Erhitzens des rohen pilzbasierten Fleischersatzes auf eine Temperatur von 121 °C bis 141 °C für mindestens etwa 5 Minuten in einer luftdicht verschlossenen Packung;
wobei das Pilzmaterial im Wesentlichen Pilzstiel umfasst und
wobei der Retortensterilisationsvorgang eine Maillard-Reaktion induziert.

8. Verfahren nach Anspruch 7, wobei das Pilzmaterial zerkleinerten Pilzstiel umfasst.

9. Verfahren nach Anspruch 7 oder Anspruch 8, wobei das Pilzmaterial Pilz der Gattung umfasst, die aus der Gruppe bestehend aus *Agaricus, Lentinula, Pleurotus, Hericium, Laetiporus, Armillaria, Pioppini, Flammulina, Hypsizygus, Lyophyllum, Canterellus* oder Kombinationen davon ausgewählt ist.

10. Verfahren nach einem der Ansprüche 7 bis 9, wobei die Emulsion Lecithin, Wasser und ein pflanzliches Öl umfasst.

11. Verfahren nach einem der Ansprüche 7 bis 10, wobei das Bindemittel eine pflanzliche Stärke, ein pflanzliches Fett oder ein pflanzliches Protein ist.

12. Verfahren nach einem der Ansprüche 7 bis 11, wobei die Temperatur 121 °C bis 126 °C beträgt.

13. Verfahren zur Herstellung eines pilzbasierten Fleischersatzes, umfassend etwa 30 Gew.-% bis etwa 95 Gew.-% Pilzmaterial, etwa 2 Gew.-% bis etwa 60 Gew.-% Emulsion und etwa 0,5 Gew.-% bis etwa 10 Gew.-% Bindemittel, wobei das Verfahren die Schritte umfasst:
Unterziehen des Pilzmaterials einem Retortensterilisationsvorgang, umfassend den Schritt eines Erhitzens des Pilzmaterials auf eine Temperatur von 121 °C bis 141 °C für mindestens etwa 5 Minuten in einer luftdicht verschlossenen Packung;
Herstellen eines rohen pilzbasierten Fleischersatzes, umfassend das retortensterilisierte Pilzmaterial, das Bindemittel und die Emulsion;
Unterziehen des rohen pilzbasierten Fleischersatzes einem Formungsvorgang;
wobei das Pilzmaterial im Wesentlichen Pilzstiel umfasst und
wobei der Retortensterilisationsvorgang eine Maillard-Reaktion induziert.

14. Verfahren nach Anspruch 13, wobei das Pilzmaterial zerkleinerten Pilzstiel umfasst.

15. Verfahren nach einem der Ansprüche 13 bis 14, wobei die Temperatur 121 °C bis 126 °C beträgt.

16. Pilzbasierter Fleischersatz, der durch das Verfahren nach einem der Ansprüche 1 bis 15 produziert wird.

## Revendications

1. Un procédé de préparation d'un substitut de viande à base de champignons comprenant environ 30 % p/p à environ 95 % p/p de matière de champignons, environ 2 % p/p à environ 60 % p/p d'émulsion et environ 0,5 % p/p à environ 10 % p/p d'agent liant, dans lequel, le procédé comprenant les étapes consistant à :
préparer un substitut de viande à base de champignons crus comprenant le matériau de champignons, l'agent liant et l'émulsion ;
exposer le substitut de viande à base de champignons crus à un processus de formage pour produire un substitut de viande à base de champignons formé ;
exposer le substitut de viande à base de champignons formé à un processus de cuisson comprenant l'étape de chauffage du substitut de viande à base de champignons crus à une température comprise entre 121 °C et 141 °C pendant au moins environ 5 minutes dans un emballage hermétiquement fermé ;
dans lequel le matériau de champignon comprend essentiellement une tige de champignon ;
et dans lequel le processus de stérilisation en autoclave induit une réaction de Maillard.

2. Le procédé selon la revendication 1, dans lequel le matériau de champignon comprend une tige de champignon déchiquetée.

3. Le procédé selon la revendication 1 ou la revendication 2, dans lequel le matériau de champignon comprend des champignons des genres sélectionnés dans les groupes constitués par agaric, lentinula, pleurote, hericium, laetiporus, armillaire, pioppini, flammuline, hypsizygus, lyophyllum, chanterelle, ou des combinaisons de ceux-ci.

4. Le procédé selon l'une quelconque des revendications 1 à 3, dans lequel l'émulsion comprend de la lécithine, de l'eau et une huile d'origine végétale.

5. Le procédé selon l'une quelconque des revendications 1 à 4, dans lequel l'agent liant est un amidon, une graisse ou une protéine d'origine végétale.

6. Le procédé selon l'une quelconque des revendications 1 à 5, dans lequel la température est comprise entre 121 °C et 126 °C.

7. Un procédé de préparation d'un substitut de viande à base de champignons comprenant environ 30 % p/p à environ 95 % p/p de matière de champignons, environ 2 % p/p à environ 60 % p/p d'émulsion et environ 0,5 % p/p à environ 10 % p/p d'agent liant, dans lequel, le procédé comprenant les étapes consistant à :
exposer le matériau de champignon à un processus de formation ;
préparer un substitut de viande à base de champignons crus comprenant le matériau de champignons formé, l'agent liant et l'émulsion ;
exposer le substitut de viande à base de champignons crus à un processus de stérilisation en autoclave comprenant l'étape de chauffage du substitut de viande à base de champignons crus à une température comprise entre 121 °C et 141 °C pendant au moins environ 5 minutes dans un emballage hermétiquement fermé ;
dans lequel le matériau de champignon comprend essentiellement une tige de champignon et ;
dans lequel le processus de stérilisation en autoclave induit une réaction de Maillard.

8. Le procédé selon la revendication 7, dans lequel le matériau de champignon comprend une tige de champignon déchiquetée.

9. Le procédé selon la revendication 7 ou la revendication 8, dans lequel le matériau de champignon comprend des champignons des genres sélectionnés dans les groupes constitués par agaric, lentinula, pleurote, hericium, laetiporus, armillaire, pioppini, flammuline, hypsizygus, lyophyllum, chanterelle ou des combinaisons de ceux-ci.

10. Le procédé selon l'une quelconque des revendications 7 à 9, dans lequel l'émulsion comprend de la lécithine, de l'eau et une huile d'origine végétale.

11. Le procédé selon l'une quelconque des revendications 7 à 10, dans lequel l'agent liant est un amidon, une graisse ou une protéine d'origine végétale.

12. Le procédé selon l'une quelconque des revendications 7 à 11, dans lequel la température est comprise entre 121 °C et 126 °C.

13. Un procédé de préparation d'un substitut de viande à base de champignons comprenant environ 30 % p/p à environ 95 % p/p de matériau de champignon, environ 2 % p/p à environ 60 % p/p d'émulsion et environ 0,5 % p/p à environ 10 % p/p d'agent liant, dans lequel, le procédé comprenant les étapes consistant à :
exposer le matériau de champignon à un processus de stérilisation en autoclave comprenant l'étape consistant à chauffer le matériau de champignon à une température comprise entre 121 °C et 141 °C pendant au moins environ 5 minutes dans un emballage hermétiquement fermé ;
préparer un substitut de viande à base de champignons crus comprenant le matériau de champignon stérilisé en autoclave, l'agent liant et l'émulsion ;
exposer le substitut de viande à base de champignons crus à un processus de formage ;
dans lequel le matériau de champignon comprend essentiellement une tige de champignon ;
et dans lequel le processus de stérilisation en autoclave induit une réaction de Maillard.

14. Le procédé selon la revendication 13, dans lequel le matériau de champignon comprend une tige de champignon déchiquetée.

15. Le procédé selon l'une quelconque des revendications 13 à 14, dans lequel la température est comprise entre 121 °C et 126 °C.

16. Un substitut de viande à base de champignons produit par le procédé selon l'une quelconque des revendications 1 à 15.
